# FASCICULE DE BREVET EUROPEEN

(11) **EP 0 827 095 B1**
(45) Date de publication et mention de la délivrance du brevet: **08.01.2003**
(21) Numéro de dépôt: 97401981.2
(22) Date de dépôt: 25.08.1997
(51) Int. Cl.: G06F 17/30

(54) **Moteur logiciel multimedia**
Multimedia-Softwaremotor
Multimedia software engine

(30) Priorité: 29.08.1996 FR 9610563
(43) Date de publication de la demande: 04.03.1998
(73) Titulaire: ALCATEL, 75008 Paris (FR)
(72) Inventeur: Baleh, Farid, 91190 Gif Sur Yvette (FR); Theodora, Eric, 91940 Les Ulis (FR); Aidan, Bruno, 75014 Paris (FR)
(74) Mandataire: Lamoureux, Bernard

(56) Documents cités:
- FUNG C -L ET AL: "MOCS: AN OBJECT-ORIENTED PROGRAMMING MODEL FOR MULTIMEDIA OBJECT COMMUNICATION AND SYNCHRONIZATION" PROCEEDINGS OF THE INTERNATIONAL CONFERENCE ON DISTRIBUTED COMPUTIN SYSTEMS, POZNAN, POLAND, JUNE 21 - 24, 1994, no. CONF. 14, 21 juin 1994, INSTITUTE OF ELECTRICAL AND ELECTRONICS ENGINEERS, pages 494-501, XP000489112

## Description

L'invention concerne les systèmes de présentation de documents multimédia interactifs.

Suivant le futur standard MHEG (« Multimedia and Hypermedia Expert Group »), la présentation d'un document multimédia interactif repose sur la création d'instances de classes. Dans la terminologie du standard MHEG, ces instances sont des objets au sens de la programmation objet. Un moteur logiciel dans le système de présentation est responsable de l'interprétation des objets MHEG pour reconstruire la structure (ou scénario) du document multimédia interactif à présenter. Le document intitulé « MHEG Explained » de Thomas Meyer-Boudnik and Wolfgang Effelsberg - 1070-968X/1995 IEEE - donne des détails sur la structure de ces objets MHEG.

On sait que le multimédia met en oeuvre des informations de natures différentes : séquences vidéo animées, son, textes, images graphiques, images vidéo fixes, etc. D'un point de vue temporel, ces différentes informations peuvent être classées selon deux catégories :
- les informations dites à caractère dynamique dont la présentation est par nature associée à un temps d'affichage ; c'est le cas de la vidéo animée et du son. Ces informations sont généralement stockées sur des supports physiques (serveur vidéo, serveur audio, vidéodisque, bande magnétique, etc.) avec une base de temps codé ou « time code ». Par exemple, l'enregistrement de la vidéo animée sur un vidéodisque implique de stocker conjointement un numéro d'image (sur la base de 25 images par seconde dans les standards vidéo européens) avec chacune des images fixes qui la compose ;
- les informations dites à caractère statique dont la présentation n'est pas fondamentalement associée à un temps d'affichage ; c'est le cas-du texte, de l'image graphique ou vidéo fixe. Ces informations sont stockées sur des supports physiques sans base de temps associée.

Par ailleurs, dans un système multimédia interactif, l'utilisateur peut agir sur la présentation du document, par exemple en demandant au système un changement de la vitesse de présentation du document.

Le but de l'invention est de proposer un moteur logiciel multimédia adapté à une représentation objet d'un document multimédia à présenter et apte à gérer les liens spatio-temporels qui peuvent être définis entre les objets représentant les composantes à caractère statique et les composantes à caractère dynamique d'un tel document même en cas de changement de la vitesse de présentation de ce document.

A cet effet, l'invention a pour objet un moteur logiciel pour un système de présentation d'un document multimédia interactif ayant des composantes à caractère statique et des composantes à caractère dynamique et représenté dans le système suivant un modèle objet, caractérisé par le fait qu'il comporte :
un premier moyen pour produire des premiers événements relatifs à des interactions utilisateur,
un second moyen pour produire des seconds événements relatifs à des instants de présentation des composantes à caractère statique du document,
un troisième moyen pour produire des troisièmes événements relatifs à des instants de présentation des composantes à caractère dynamique du document, et
un système de traitement pour traiter lesdits événements de façon à déclencher, suivant une certaine chronologie, la présentation des composantes à caractère statique et des composantes à caractère dynamique du document.

Le moteur logiciel selon l'invention présente donc une architecture modulaire découlant d'une certaine typologie d'événements gérés par ce moteur logiciel. Cette modularité permet de faire évoluer le moteur logiciel de façon simple si de nouveaux types d'événements doivent être gérés et d'établir, le cas échéant, une prise en compte de priorités liées à ces différents types d'événements.

Un exemple de réalisation du moteur logiciel selon l'invention est décrit plus en détails ci-après en référence aux dessins.

La figure 1 illustre la représentation sous forme d'objets, dans le système de présentation de documents multimédia interactifs, d'un exemple simple d'un document multimédia ayant une seule composante à caractère statique et une seule composante à caractère dynamique.

La figure 2 illustre l'architecture modulaire du moteur logiciel selon l'invention.

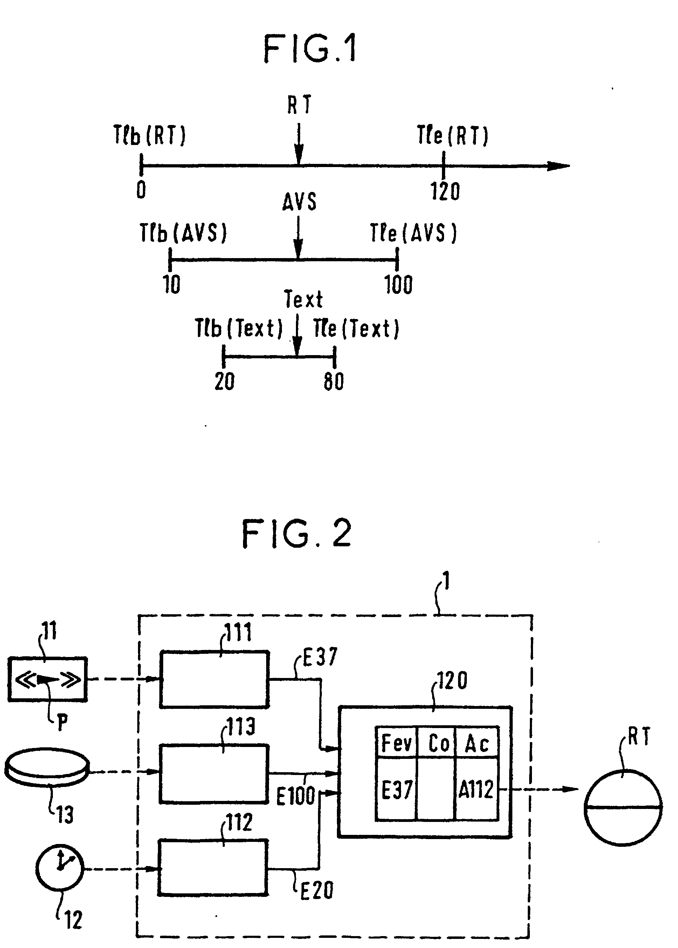

Dans la figure 1, le document multimédia pris à titre d'exemple est composé d'une séquence audiovisuelle (composante à caractère dynamique) et d'un texte (composante à caractère statique).

Ce document multimédia est représenté suivant un modèle objet par un premier objet dit objet racine RT correspondant au document multimédia lui-même, un second objet dit objet monomédia dynamique AVS correspondant à la composante à caractère dynamique du document et un troisième objet dit objet monomédia statique Text correspondant à la composante à caractère statique.

Le moteur logiciel a pour fonction de traiter ces différents objets afin de reconstruire le scénario du document multimédia notamment en prenant en compte les différents liens spatio-temporels qui peuvent être définis entre les objets.

Par exemple, sur la figure 1, on voit que la présentation du document multimédia débute par l'exécution de l'objet racine RT à un instant Tlb(RT)=0 et finit à un instant Tle(RT)=120 (la base de temps a ici comme unité la seconde). La présentation de la composante dynamique de ce document débute par l'exécution de l'objet monomédia dynamique à un instant Tlb(AVS)=10 et finit à un instant Tle(AVS)=100. La présentation de la composante statique débute par l'exécution de l'objet monomédia statique à un instant Tlb(text)=20 et finit à un instant Tle(Text)=80. On remarque que dans cet exemple, la présentation de la composante statique du document a lieu pendant la présentation de la composante dynamique de ce document.

Dans la figure 2, le moteur logiciel 1 selon l'invention a une architecture modulaire qui découle d'une certaine typologie d'événements gérés par le moteur logiciel. La typologie des événements gérés par le moteur logiciel est définie de façon à distinguer des premiers événements dits événements utilisateur, des seconds événements dits événements temporels et des troisièmes événements dits événements support.

Comme visible sur la figure 2, le moteur logiciel comprend des gestionnaires d'événements spécialisés chacun pour un type particulier d'événements. Le moteur logiciel comprend ainsi un gestionnaire 111 des événements utilisateur, un gestionnaire 112 des événements temporels et un gestionnaire 113 des événements support.

Plus particulièrement, le gestionnaire 111 produit un événement utilisateur en réponse à une interaction utilisateur, c'est-à-dire à une action de l'utilisateur sur le système de présentation de documents par exemple pour obtenir un changement de la vitesse de présentation du document multimédia via une interface telle que 11. L'interface 11 peut être une interface graphique par laquelle l'utilisateur peut commander le démarrage de la présentation du document, un changement de la vitesse de présentation, un arrêt de la présentation en cours, etc.

Le gestionnaire 112 produit un événement temporel quand une horloge telle que 12 indique une date qui correspond à un instant particulier de présentation d'une composante à caractère statique du document. Dans le cas de l'exemple de la figure 1, un événement temporel est produit à l'instant Tlb(Text)=20 de démarrage de l'affichage de la composante à caractère statique.

Le gestionnaire 113 produit un événement support quand le support 13 de données physiques (par exemple un vidéodisque) servant à l'enregistrement des composantes dynamiques du document indique un changement d'état. Dans le cas de l'exemple de la figure 1, un événement support est produit quand le support 13 arrive à la fin de la présentation de la séquence audiovisuelle AVS (Tle(AVS)=100)

Chaque gestionnaire évalue en fait périodiquement une liste de changements d'état ou conditions déclenchantes des événements. Si une condition déclenchante est vérifiée au moment de l'évaluation, l'événement correspondant est produit et transmis à un système de traitement des événements 120.

Les événements produits par les gestionnaires sont traités par le système 120 de façon à déclencher la présentation des composantes statiques ou dynamiques du document suivant une certaine chronologie. Cette chronologie est donnée par une logique événementielle implémentée par exemple dans une table comme montrée sur la figure 2. La table présente des colonnes qui contiennent les événements Ev produits par les gestionnaires, des conditions additionnelles éventuelles Co liées aux événements à vérifier et des actions correspondantes Ac à entreprendre.

Par exemple, quand l'utilisateur demande le démarrage de la présentation du document multimédia via le bouton P de l'interface 11, le gestionnaire 111 détecte un changement d'état et produit un événement utilisateur correspondant E37. Cet événement E37 est transmis au système 120 qui déclenche l'action A112 correspondant à l'exécution de l'objet RT et donc au démarrage de la présentation du document multimédia. Quand l'horloge 12 indiquera une date correspondant à l'instant Tlb(Text)=20, le gestionnaire 112 détectera un changement d'état et produira un événement E20. Sur réception de cet événement E20, le système 120 déclenchera l'exécution de l'objet Text pour démarrer la présentation de la composante statique du document. Quand le support de données 13 arrivera en fin de lecture de la composante dynamique du document à l'instant Tle(AVS)=100, le gestionnaire 113 détectera un changement d'état et produira un événement E100. Sur réception de cet événement E100, le système 120 déclenchera l'arrêt de l'exécution de l'objet AVS pour arrêter la présentation de la composante dynamique du document.

On comprend que les changements de vitesse de présentation du document multimédia se traduisent dans le moteur logiciel par la production d'événements en sortie du gestionnaire 11 et la prise en compte de ces événements par le système 120 pour commander notamment le lecteur du support 13.

## Revendications

1. Un moteur logiciel multimédia pour un système de présentation d'un document multimédia interactif ayant des composantes à caractère dynamique et des composantes à caractère statique et représenté dans le système suivant un modèle objet, **caractérisé en ce qu'**il comprend :
• Un premier moyen (111) pour produire des premiers événements relatifs à des interactions utilisateurs,
• Un second moyen (112) pour produire des seconds événements relatifs à des instants de présentation des composantes à caractère statique du document,
• Un troisième moyen (113) pour produire des troisièmes événements relatifs à des instants de présentation des composantes à caractère dynamique du document, chacun desdits moyens évaluant périodiquement une liste de changements d'état ou conditions déclenchantes desdits événements, et
• Un système de traitement (120) pour traiter lesdits événements de façon à déclencher, suivant une certaine chronologie, la présentation des composantes à caractère statique et des composantes à caractère dynamique du document.

## Claims

1. A multimedia software engine for a system for presentation of an interactive multimedia document having components of a dynamic character and components of a static character and represented in the system in accordance with an object-oriented model, **characterized in that** it includes:
• first means (111) for producing first events relating to user interactions,
• second means (112) for producing second events relating to times of presentation of components of the document of a static character,
• third means (113) for producing third events relating to times of presentation of components of the document of a dynamic character all of said means evaluating periodically a list of changes of state or conditions triggering said events, and
• a processing system (120) for processing said events so as to trigger, in accordance with a certain chronology, the presentation of the components of a static character and the components of a dynamic character of the document.

## Patentansprüche

1. Software-Motor für ein System zum Präsentieren eines interaktiven Multimedia-Dokuments, mit Komponenten mit dynamischen Charakter und Komponenten mit statischem Charakter, in dem System nach einem Objektmodell dargestellt, **dadurch gekennzeichnet, dass** er umfasst:
- ein erstes Mittel (111) zum Erzeugen von ersten Ereignissen bezogen auf Benutzer-Wechselwirkungen,
- ein zweites Mittel (112) zum Erzeugen von zweiten Ereignissen bezogen auf Zeitpunkte zum Präsentieren von Komponenten mit statischem Charakter des Dokuments,
- ein drittes Mittel zum Erzeugen von dritten Ereignissen bezogen auf Zeitpunkte zum Präsentieren von Komponenten mit dynamischen Charakter des Dokuments, wobei jedes dieser Mittel periodisch eine Liste von Zustandsänderungen oder Auslösebedingungen der Ereignisse bewertet, und
- ein Verarbeitungssystem (120) zum Verarbeiten der Ereignisse, um nach einer bestimmten Chronologie die Präsentation der Komponenten mit statischem Charakter und der Komponenten mit dynamischen Charakter des Dokuments auszulösen.
